# EUROPÄISCHE PATENTSCHRIFT

(11) **EP 0 307 648 B1**
(45) Veröffentlichungstag und Bekanntmachung des Hinweises auf die Patenterteilung: **15.12.1993**
(21) Anmeldenummer: 88113484.5
(22) Anmeldetag: 19.08.1988
(51) Int. Cl.: A22C 17/00, A22C 17/04

(54) **Separiereinrichtung**
Separating apparatus
Appareil séparateur

(30) Priorität: 14.09.1987 US 95666
(43) Veröffentlichungstag der Anmeldung: 22.03.1989
(73) Patentinhaber: NORDISCHER MASCHINENBAU RUD. BAADER GMBH + CO KG, 23560 Lübeck (DE)
(72) Erfinder: Ewing, Richard C., Assonet, MA 02702 (US); Kuczewski, Walter V., New Bedford, MA 02745 (US); Thurber, Gerald A., Rehoboth, MA 02769 (US); Kunig, Helmut, DE-2407 Bad Schwartau (DE)

(56) Entgegenhaltungen:
- EP-A- 0 179 973
- DE-A- 1 507 972
- DE-A- 2 032 774
- DE-A- 3 516 623
- DE-B- 2 159 465
- DE-C- 3 143 474
- GB-A- 2 093 331
- NL-A- 7 513 666
- US-A- 2 734 540
- US-A- 3 612 128
- US-A- 3 734 000

## Beschreibung

Die Erfindung betrifft eine Einrichtung zum Trennen von miteinander vermischten fließfähigen und nicht fließfähigen Bestandteilen, mit einer umlaufenden, perforierten Passiertrommel, einem elastischen, die Passiertrommel auf einem Teil ihres Umfanges umschlingenden, endlosen Preßband, einer das Preßband gegen die Peripherie der Passiertrommel andrückenden Preßwalze, wobei die fließfähigen Bestandteile des zu behandelnden und zwischen der Peripherie der Passiertrommel und dem Preßband angeordneten Material unter dem Druck der Preßwalze durch die Perforation in das Innere der Passiertrommel gelangt, wahrend die nicht fließfähigen Bestandteile auf der Peripherie der Passiertrommel verbleiben, sowie mit mindestens einer vor der Passiertrommel derart angeordneten Umlenkwalze, daß sich ein Einzugskeil zwischen dem Preßband und der Peripherie der Passiertrommel ergibt.

Eine derartig konzipierte Einrichtung ist beispielsweise aus der DE 31 34 474 C1 bekannt.

Separiereinrichtungen dieser Ausführung werden beispielsweise eingesetzt, um Fischfleisch von Gräten und Haut zu trennen, aber auch um Fleisch von Körperteilen von Warmblütern zu trennen, wenn Schwierigkeiten beim Entfernen des Fleisches mit konventionellen Mitteln diesen Prozeß unwirtschaftlich machen. Als Beispiel, welches nicht als Beschränkung zu sehen ist, ergeben sich beim Entfernen des Fleisches von den Knochen von Puten-Hinterteilen, -Rückenteilen, -Gerippen und -Hälsen besondere Vorteile durch Steigerung des wirtschaftlichen Wertes eines landwirtschaftlichen Produkts.

Der Durchsatz des zu separierenden Materials hängt von der Geschwindigkeit ab, mit welcher das Material in den Einzugskeil zwischen der perforierten Passiertrommel und dem Preßband eingebracht werden kann. Ein Problem besteht in der Aufrechterhaltung des Durchsatzes von fettigem Material, wie beispielsweise der oben genannten Putenteile. Das liegt daran, daß der Fettgehalt des Fleisches die Passiertrommel und das Preßband so weitgehend schmiert, daß dem Material möglich wird, den Einzugskeil zu überbrücken und entweder den Einzug des Materials zu verlangsamen oder zu unterbinden.

Eine Maßnahme zur Beeinflussung des Förderverhaltens eines Förderbandes ist aus der NL-A-75 13 666 zu entnehmen.

Dabei handelt es sich um ein in einer Dreschmaschine für Hülsenfrüchte installiertes Förderband, das vorgesehen ist, um das ausgedroschene Gemisch aus Früchten und Schalen zu trennen. Dazu ist das Förderband ansteigend angeordnet und wird es durch unrunde Umlenkrollen in wippende Bewegung versetzt, wodurch die Früchte veranlaßt werden sollen, gegen die Laufrichtung des Förderbandes zu dessen unterem Ende zu gelangen.

Es ist die Aufgabe der Erfindung, eine Separiereinrichtung mit den eingangs beschriebenen Baumerkmalen vorzuschlagen, mit der ein gleichmäßiger Durchsatz insbesondere durch Vermeiden von Materialbrücken im Einzugsbereich erreichbar ist.

Diese Aufgabe wird erfindungsgemäß dadurch gelöst, daß mindestens die in bezug auf die Umlaufrichtung des Preßbandes unmittelbar vor der Passiertrommel angeordnete Umlenkwalze als taumelnd oder exzentrisch gelagerte Umlenkwalze ausgebildet ist.

Der Vorteil dieser Anordnung liegt insbesondere darin, daß die Taumelbewegung der Umlenkwalze das Preßband rythmisch verspannt, so daß die Neigung des zu behandelnden Materials, den Einzugskeil zu überbrücken, unterbunden wird.

Nach einer vorteilhaften Ausführung der Erfindung können zwei Taumelwalzen vorgesehen sein, wobei die Anordnung so getroffen ist, daß deren Taumelbewegung gegenphasig verläuft. Damit besteht die Möglichkeit, die Spannung des Preßbandes unabhängig von der Taumelbewegung im wesentlichen konstant zu halten.

Die Taumelbewegung kann dadurch erreicht werden, daß jede Umlenkwalze jeweils eine zu ihrer zentralen Achse schräg verlaufende Achsbohrung aufweist. Dabei ist es aus Gründen der seitlichen Abdichtung des Preßbandes gegenüber für diese sorgenden Bauteilenvorteilhaft, wenn die Stirnflächen jeder Umlenkwalze zu der Achsbohrung senkrecht verlaufen. Eine Reduzierung der Beanspruchung des Preßbandes kann erreicht werden durch , Ausbildung in der Weise, daß die exzentrisch gelagerten Umlenkwalzen über diesen in der gleichen Exzenterstellung zugeordnete Kettenräder unter gegenphasiger Kopplung getriebemäßig miteinander verbunden sind, so daß ein Betrieb unter konstanter Spannung des Preßbandes ermöglicht wird.

Die erfindungsgemäße Einrichtung sowie andere vorteilhafte Merkmale derselben werden in der folgenden Beschreibung im Zusammenhang mit den Zeichnungen offenbart, in welchen gleiche Bezugszeichen gleiche Elemente bezeichnen.

Es zeigt
Fig. 1 eine schematische Seitenansicht einer Separiereinrichtung, von der Abdekkungen und Verkleidungen entfernt sind, um Einbau-Komponenten zu zeigen,
Fig. 2 einen Querschnitt längs der Schnittlinie 11 - 11 in Fig. 1 ,
Fig. 3 eine Ansicht einer gemäß der Erfindung ausgeführten Taumelwalze, und
Fig. 4 eine Ansicht einer Umlenkwalze mit exzentrischer Lagerung.

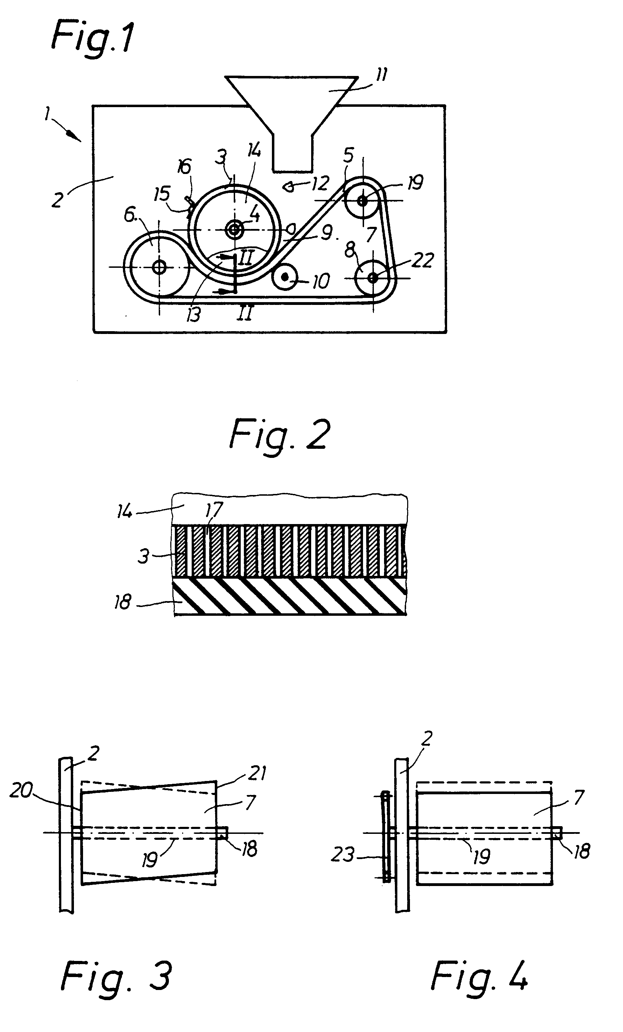

In Fig. 1 ist eine erfindungsgemäße Separiereinrichtung allgemein mit 1 bezeichnet. Ein Maschinengestell 2 trägt eine auf einer Achse 4 gelagerte, durch einen, hinter dem Maschinengestell 2 angeordneten konventionellen Antrieb umlaufend angetriebene Passiertrommel 3 . Zwischen dieser und einer Preßwalze 6 ist ein dickes, elastisches Preßband 5 eingespannt, welches durch eine erste 7 und eine zweite Umlenkrolle 8 geführt wird, so daß ein Einzugskeil 9 zwischen der Peripherie der Passiertrommel 3 und dem Preßband 5 gebildet wird. Eine oder mehrere Stützrollen 10 sind wahlweise vorgesehen, um das zu behandelnde Material 12 zwischen der Passiertrommel 3 und dem Preßband 5 auszubreiten. Ein Vorratstrichter 11 führt das zu behandelnde Material 12 in den Einzugskeil 9.

Während des Betriebes wird das nutzbare Material 13 durch die nicht gezeigten Perforationen in der Passiertrommel 3 in das Innere 14 derselben hineingepreßt. Das nicht nutzbare Material 15 , wie beispielweise Knochen, Haut und Sehnen, verbleibt auf der äußeren Oberfläche der Passiertrommel 3 , von wo es durch einen Schaber 16 abgeschabt wird.

Bestimmte Arten von zu behandelnden Materialien 12 sind vorbearbeitet, bevor sie in den Einzugskeil 9 gelangen. Knochenhaltiges Material, wie Puten-Skelette und -Hälse werden vorteilhafterweise durch einen Zerkleinerer vorbearbeitet, um die Knochen zu brechen und damit den Einzug zwischen Passiertrommel 3 und Preßband 5 zu erleichtern.

Auch bei einer solchen Vorbearbeitung zeigte sich jedoch, daß das zu behandelnde Material 12 den Einzugskeil 9 überbrücken und den Durchsatz verringern oder stoppen kann.

In Fig. 2 ist eine Passiertrommel 3 mit einer Vielzahl von Durchbrüchen oder Bohrungen 17 zu sehen, die die Passiertrommel 3 vollständig durchdringen. Das Fleisch des zwischen das Preßband 5 und die Pasiertrommel 3 gelangten Materials 12 (Fig. 1) wird durch die Bohrungen 17 in das Innere 14 der Passiertrommel 3 gepreßt, während Teile wie Knochen, Haut und Sehnen zwischen dem Preßband 5 und der Passiertrommel 3 verbleiben. Auf diese Weise wird die Trennung erreicht.

Gemäß Fig. 3 ist eine Umlenkwalze 7 auf einer Achse 18 gelagert, die an dem Maschinengestell 1 befestigt ist. Die Achsbohrung 19 in der Umlenkwalze 7 ist zu der Längsachse derselben schräg ausgerichtet. Daher taumelt die Umlenkwalze 7 zwischen den in Voll- und gestrichelten Linien gezeigten Anschlägen, wenn sie rotiert. Die Stirnflächen 20 und 21 bilden vorzugsweise zu der Achsbohrung 19 senkrechte Flächen.

Nach Fig. 4 ist die Umlenkwalze 7 auf einer Achse 18 befestigt, die in geeigneter Weise in dem Maschinengestell 1 gelagert ist. Die Achse 18 ist in der Umlenkwalze 7 exzentrisch gelagert und mit einem Zahnrad 23 versehen, welches in gleicher Weise exzentrisch angeordnet ist.

Zurückkommend auf Fig. 1 bewirkt die Taumelbewegung der Mantelfläche der Umlenkwalze 7 eine Verspannung des Preßbandes 5 , wenn es sich dem Einzugskeil 9 nähert. D. h. eine solche Taumelbewegung erzeugt eine abwechselnde Schlaffung und Straffung über die Breite des Preßbandes 5 , was das Material 12 hindert, den Einzugskeil 9 zu überbrücken, wodurch das Material 12 in den letzteren gelangt, um in der beschriebenen Weise getrennt zu werden.

Obgleich die genauen Einzelheiten der Art des Antriebs der erfindungsgemäßen Einrichtung nicht Bestandteil der Erfindung sind, wird darauf hingeweisen, daß sowohl die Passiertrommel 3 als auch die Preßwalze 6 durch einen hinter dem Maschinengestell 12 befindlichen Antrieb angetrieben werden. Zusätzlich können auch eine der oder beide Umlenkwalzen 7 und 8 angetrieben sein. Vorzugsweise ist die Umlenkwalze 7 mit nicht gezeigten Nuten an ihrer Mantelfläche versehen, um eine Übertragung des Antriebsmonentes von dem Preßband 5 auf die Umlenkwalze 7 zu unterstützen.

Die Taumelbewegung der Umlenkwalze verursacht abwechselnde Streckung und Entspannung jedes Teils des Preßbandes 5 . Ein Verfahren, diesen Effekt abzubauen, besteht in der Verwendung einer Umlenkwalze 8 mit einer schrägen Schaftbohrung 22 , die derjenigen 19 identisch ist. Die Umlenkwalzen können miteinander verbunden sein, um in gegenläufigen Phasen zu rotieren. D. h., wenn die Umlenkwalze 7 in eine das Preßband 5 streckende Lage dreht, dreht sich die Umlenkwalze 8 in eine kompensierende Lage, um den gleichen Teil des Preßbandes 5 um den gleichen Betrag zu entspannen.

Der der Umlenkwalze 7 mitgeteilte Taumelausschlag kann je nach Anwendungsfall variieren. Es wurde gefunden, daß bei einer Separiereinrichtung 1 mit einer Passiertrommel 3 von ca. 355 mm Durchmesser und einer Umlenkwalze 7 von ca. 200 mm bei ca. 305 mm Länge in den Stirnflächen 20 und 21 ein Versatz der Achsbohrung 19 gegenüber der Zentralachse von 6 bis 25 mm den Durchsatz von Puten-Hälsen verbessert. Für die Anwendung scheint ein Versatz von ca. 20 mm die besten Ergebnisse zu bringen. Bei unterschiedlichen Maschinenabmaßen oder zu behandelnden Produkten kann der Durchsatz mit geändertem Versatz optimiert werden. Der Fachmann wird jedenfalls angesichts der vorliegenden Darlegungen befähigt, die erforderlichen unterschiedlichen Maßnahmen zu treffen.

Die vorliegende Beschreibung in Verbindung mit den Zeichnungen ist nicht als Beschränkung der Erfindung auf solche Ausführungen zu verstehen und mannigfaltige Änderungen und Modifikationen können durch den Fachmann bewerkstelligt werden, ohne das in den Ansprüchen niedergelegte Wesen und den Umfang der Erfindung zu verlassen.

## Patentansprüche

1. Einrichtung zum Trennen von mit einander vermischten fließfähigen und nicht fließfähigen Bestandteilen, mit einer umlaufenden, perforierten Passiertrommel (3) , einem elastischen, die Passiertrommel (3) auf einem Teil ihres Umfanges umschlingenden, endlosen Preßband (5) , einer das Preßband (5) gegen die Peripherie der Passiertrommel (3) andrückenden Preßwalze (6) , wobei die fließfähigen Bestandteile des zu behandelnden und zwischen der Peripherie der Passiertrommel (3) und dem Preßband (5) angeordneten Materials unter dem Druck der Preßwalze (6) durch die Perforation in das Innere der Passiertrommel (3) gelangen , während die nicht fließfähigen Bestandteile auf der Peripherie der Passiertrommel (3) verbleiben, sowie mit mindestens einer vor der Passiertrommel (3) derart angeordneten Umlenkwalze (7), daß sich ein Einzugskeil (9) zwischen dem Preßband (5) und der Peripherie der Passiertrommel (3) ergibt, dadurch gekennzeichnet , daß mindestens die in bezug auf die Umlaufrichtung des Preßbandes (5) unmittelbar vor der Passiertrommel (3) angeordnete Umlenkwalze (7) als taumelnd oder exzentrisch gelagerte Umlenkwalze ausgebildet ist.

2. Einrichtung nach Anspruch 1 , dadurch gekennzeichnet , daß eine zweite Umlenkwalze (8) als taumelnd oder exzentrisch gelagerte Umlenkwalze ausgebildet ist, wobei die Anordnung so getroffen ist, daß deren Taumelbewegung gegenphasig zu der der Umlenkwalze (7) verläuft.

3. Einrichtung nach Anspruch 1 oder 2 , dadurch gekennzeichnet , daß jede Umlenkwalze (7, 8) jeweils eine zu ihrer zentralen Achse schräg verlaufende Achsbohrung (19 bzw. 22) aufweist.

4. Einrichtung nach Anspruch 3 , dadurch gekennzeichnet , daß die Stirnflächen (20 u. 21) jeder Umlenkwalze (7, 8) zu der Achsbohrung (19 bzw. 22) senkrecht verlaufen.

5. Einrichtung nach Anspruch 5 , dadurch gekennzeichnet , daß die exzentrisch gelagerten Umlenkwalzen (7, 8) über diesen in der gleichen Exzenterstellung zugeordnete Kettenräder (23) unter gegenphasiger Kopplung getriebemäßig miteinander verbunden sind.

## Claims

1. Equipment for the separation of intermixed flowable and non-flowable components, with a circulating, perforated sieve drum (3), an elastic, endless press belt (5) looping around the sieve drum (3) over a part of its circumference, a press roller (6) pressing the press belt (5) against the periphery of the sieve drum (3), wherein the flowable components of the material to be treated, which is arranged between the periphery of the sieve drum (3) and the press belt (5), pass through the perforations into the interior of the sieve drum (3) under the pressure of the press roller (6), whilst the non-flowable components remain on the periphery of the sieve drum (3), as well as with at least one deflecting roller (7) arranged in front of the sieve drum (3) in such a manner that an intake V (9) results between the press belt (5) and the periphery of the sieve drum (3), characterised thereby that at least the deflecting roller (7) arranged directly in front of the sieve drum (3) with respect to the direction of circulation of the press belt (5) is constructed as a tumbling or eccentrically mounted deflecting roller.

2. Equipment according to claim 1, characterised thereby that a second deflecting roller (8) is constructed as a tumbling or eccentrically mounted deflecting roller, wherein the arrangement is so effected that the tumbling movement thereof runs in opposite phase to that of the deflecting roller (7).

3. Equipment according to claim 1 or 2, characterised thereby that each deflecting roller (7, 8) has a respective axial bore (19 or 22) extending at an inclination to its central axis.

4. Equipment according to claim 3, characterised thereby that the end faces (20 and 21) of each deflecting roller (7, 8) extend perpendicularly to the axial bore (19 or 22).

5. Equipment according to claim 5, characterised thereby that the eccentrically mounted deflecting rollers (7, 8) are connected together, in terms of transmission, with oppositely phased coupling by way of chain wheels (23) associated therewith in the same eccentric setting.

## Revendications

1. Appareil de séparation de composants fluides et non fluides mélangés les uns aux autres, comportant un tambour de hache-viande perforé rotatif (3), une bande de compression (5) sans fin s'enroulant sur une partie de sa périphérie, un rouleau presseur (6) pressant la bande de compression (5) contre la périphérie de tambour de hache-viande (3), les composants fluides de la matière à traiter qui passe entre la périphérie du tambour de hache-viande (3) et la bande de compression (5) étant acheminés sous la compression du rouleau presseur (6) à l'intérieur du tambour de hache-viande (3) à travers la perforation, tandis que les composants non fluides restent sur la périphérie du tambour hache-viande (3), ainsi qu'au moins un rouleau de renvoi (7) agencé devant le tambour de hache-viande (3) de manière à former un angle d'introduction (9) entre la bande de compression (5) et la périphérie du tambour hache-viande (3), caractérisé en ce qu'au moins le rouleau de renvoi (7) agencé directement devant le tambour hache-viande (3) par rapport à la direction de rotation de la bande de compression (5) se présente sous la forme d'un rouleau de renvoi monté en sorte d'assumer un mouvement de mutation ou excentré.

2. Appareil selon la revendication 1, caractérisé en ce qu'un second rouleau de renvoi (8) se présente sous la forme d'un rouleau de renvoi monté en sorte d'assumer un mouvement de mutation ou excentré, l'agencement étant tel que son mouvement de mutation se fasse en opposition de phase par rapport à celui du rouleau de renvoi (7).

3. Appareil selon la revendication 1 ou 2, caractérisé en ce que chaque rouleau de renvoi (7, 8) présente respectivement un alésage axial (19 ou 22) s'étendant obliquement par rapport à son axe central.

4. Appareil selon la revendication 3, caractérisé en ce que les surfaces frontales (20 et 21) de chaque rouleau de renvoi (7, 8) s'étendent perpendiculairement à l'alésage axial (19 ou 22).

5. Appareil selon la revendication 5, caractérisé en ce que les rouleaux de renvoi montés excentriquement (7, 8) sont reliés l'un à l'autre en fonctionnement selon un accouplement en opposition de phase par des roues à chaîne agencées sur ces rouleaux de renvoi dans la même position excentrée.
